# FASCICULE DE BREVET EUROPEEN

(11) **EP 0 795 661 B1**
(45) Date de publication et mention de la délivrance du brevet: **02.07.2003**
(21) Numéro de dépôt: 97400510.0
(22) Date de dépôt: 06.03.1997
(51) Int. Cl.: E04H 4/04, E04H 7/02, A01K 63/00, E04C 2/54

(54) **Ensemble du type reservoir, piscine, aquarium, à parois en verre**
Aufbau aus Glaswänden für Reservoir, Schwimmbecken, Aquarium
Assembly of glass panels for reservoir, swimming-pool, aquarium

(30) Priorité: 11.03.1996 FR 9603026
(43) Date de publication de la demande: 17.09.1997
(73) Titulaire: SAINT-GOBAIN GLASS FRANCE, 92400 Courbevoie (FR); Société Verriere Française, 59814 Lesquin (FR)
(72) Inventeur: Taquet, Joel, 59100 Roubaix (FR); Etienne, Jean-Michel, 08000 Charleville-Mezieres (FR); Chaunac, Michel, 78114 Magny Les Hameaux (FR)
(74) Mandataire: Renous Chan, Véronique

(56) Documents cités:
- EP-A- 0 492 502
- EP-A- 0 525 690
- CH-A- 577 606
- DE-A- 2 903 103
- DE-A- 2 931 918
- DE-A- 3 734 576
- DE-B- 1 808 878
- FR-A- 2 086 992
- FR-A- 2 572 758
- US-A- 5 199 236

## Description

La présente invention se rapporte au montage d'éléments en verre ou en général en matériaux transparents sous forme de plaques pour constituer des ensembles solidaires d'une structure, des volumes, en particulier aptes à résister à des pressions, à être étanches tels des réservoirs, des aquarium, des piscines, ...

Par la suite et dans les revendications, nous n'utiliserons que le mot verre ; il signifiera verre, matériaux verriers, vitrages constitués de plusieurs plaques de verres associées à l'aide d'une matière plastique intercalaire telle que PVB, vitrages composites associant plaques de verre et plaques de « matières plastiques », et généralement matériaux synthétiques, PVC, polycarbonates, ..., matériaux de préférence transparents pour certaines application du type aquarium, mais pas nécessairement.

Le document DE-A-29 03 103 décrit un aquarium, terrarium, ou similaire, avec au moins une paroi en verre feuilleté. Les parois latérales et le fond de l'aquarium sont assemblées entre elles par collage.

Il est classique pour réaliser des aquarium et en général des ensembles, réservoirs, piscines, ..., en verre, d'assembler les différentes plaques qui constituent les parois, et de les relier à une structure encadrante qui assure la solidité malgré la pression de l'eau, à l'aide de mastics.

La structure est construite sur le lieu d'implantation de l'aquarium, piscine, réservoir, ..., les parois en verre sont apportées, et le montage, la pose du mastic, son séchage, sa polymérisation, et en général son durcissement ont lieu in situ. C'est une difficulté, en particulier pour ce qui concerne le mastic, de travailler dans des ambiances qui ne sont pas nécessairement les mieux adaptées, de devoir fonctionner avec les matériaux existant sur place et également d'immobiliser et d'encombrer le site pendant les opérations de montage et surtout de rendre l'aquarium, le réservoir, la piscine, ..., inutilisables pendant tout le temps de séchage du mastic, temps qui peut être de plusieurs semaines. Dans la mesure où les conditions de travail n'ont pas été idéales, il peut en résulter des défauts, en particulier des défauts d'étanchéité quand il s'agira d'aquarium, de réservoir, de piscine, ..., qui se révéleront à l'usage et qui nécessiteront vidange, réfection, et donc arrêt pendant tout le temps nécessaire.

La présente invention vise à éliminer les défauts et inconvénients évoqués ci-dessus. Elle propose pour cela une structure qui autorise une préparation et un préassemblage en usine de l'ensemble envisagé aquarium, réservoir, piscine, ou autres dans des conditions et ambiances contrôlées et maîtrisées, avec les matériaux et matériels les mieux adaptés, permettant ainsi d'obtenir de bonnes performances, notamment lorsque du mastic est utilisé, une bonne adhérence, et un bon séchage, permettant aussi d'encombrer et immobiliser le site d'implantation du réservoir, aquarium ou piscine pendant un temps court pour n'effectuer que des opérations de montage mécanique, sans ou pratiquement sans pose et séchage mastic, ces éventuelles opérations avec mastic étant préalablement accomplies en usine lors du préassemblage.

Grâce à cette structure faite d'éléments pré-assemblés en usines, ne nécessitant que des interventions simples et rapides sur le site d'implantation de ladite structure, il est possible de prévoir et de stocker en prévision d'avaries, des éléments préfabriqués qui pourront ainsi rapidement remplacer les éléments défectueux. Ceci est particulièrement intéressant pour les grands aquarium sur les sites touristiques. Avec les structures classiques une avarie peut nécessiter la fermeture du site pendant plusieurs semaines, essentiellement requises pour le séchage du mastic, ce qui en période touristique représente un manque à gagner important.

Le document DE-A-29 31 918 décrit un procédé de fabrication d'un bassin composé d'éléments en plastique dans lequel le bassin est préalablement assemblé en entier puis détaillé en éléments transportables qui sont ensuite ré-assemblés sur le site d'implantation du bassin. Cet assemblage se fait grâce à des brides de montage fixées sur les panneaux, les brides de deux panneaux adjacents étant assemblées entre elles par des vis pour solidariser lesdits panneaux.

Le document FR 2 086 992 décrit un procédé de construction d'une piscine ou similaire dans lequel on utilise une pluralité de panneaux préfabriqués, chacun des panneaux comportant un encadrement de raidissement. La construction de la piscine s'effectue par assemblage d'au moins deux panneaux soit en les juxtaposant bord à bord, soit en les superposant à angle droit, la solidarisation entre deux panneaux étant réalisée par un système de vissage qui traverse de part en part une zone de l'encadrement en prenant soin de comprimer un joint positionner entre deux panneaux.

Le document EP 0 525 690 décrit un ensemble de composants destiné à la construction d'un ouvrage en verre comprenant au moins une vitre en verre feuilleté composée de deux panneaux individuels, une couche de liaison organique entre chacun desdits panneaux et des supports de maintien insérés dans la couche de liaison entre les panneaux individuels.

L'invention propose un ensemble du type réservoir, piscine, aquarium, comprenant une pluralité de parois en verre et une structure encadrant lesdites parois, notamment pour solidifier l'ensemble, et des joints d'étanchéité, dans lequel les parois en verre sont équipées de moyens mécaniques grâce auxquels elles sont solidarisées avec la structure, les joints étant disposés entre les parois elles-mêmes et/ou les moyens mécaniques de solidarisation avec la structure et ladite structure, qui se caractérise en ce que les parois en verre sont en verre feuilleté avec intercalaire du type PVB et en ce que les moyens mécaniques de solidarisation comportent un châssis monté sur les parois en verre et équipé de moyens d'attache du type vis de serrage ou trou taraudé apte à recevoir un goujon fileté, ledit châssis étant un élément à section en L de dimensions telles qu'il autorise un joint de mastic pâteux du type silicone entre lui et le verre, qui protège l'intercalaire plastique des agressions chimiques notamment avec de l'eau de mer qui pourrait remplir ledit ensemble.

Dans une autre forme de réalisation, les moyens mécaniques sont des pièces de blocage solidaires de la structure et agissant sur un débord de l'une des feuilles de verre de la paroi en verre.

L'invention sera maintenant décrite plus en détail en référence aux figures annexées qui représentent :
figure 1 une paroi en verre associée à une structure et apte à constituer une partie d'un ensemble du type aquarium, réservoir, selon une première variante de l'invention,
figure 2 l'association de deux plaques en prolongement l'une de l'autre pour constituer une paroi d'un exemple du type aquarium, selon la première variante de l'invention;
figure 3 l'association de deux plaques pour former deux parois en angle d'un ensemble du type aquarium selon la première variante,
figure 4 une paroi en verre de l'ensemble du type aquarium, selon un second mode de réalisation,
figure 5 une paroi en verre d'un ensemble du type aquarium selon un troisième mode de réalisation.

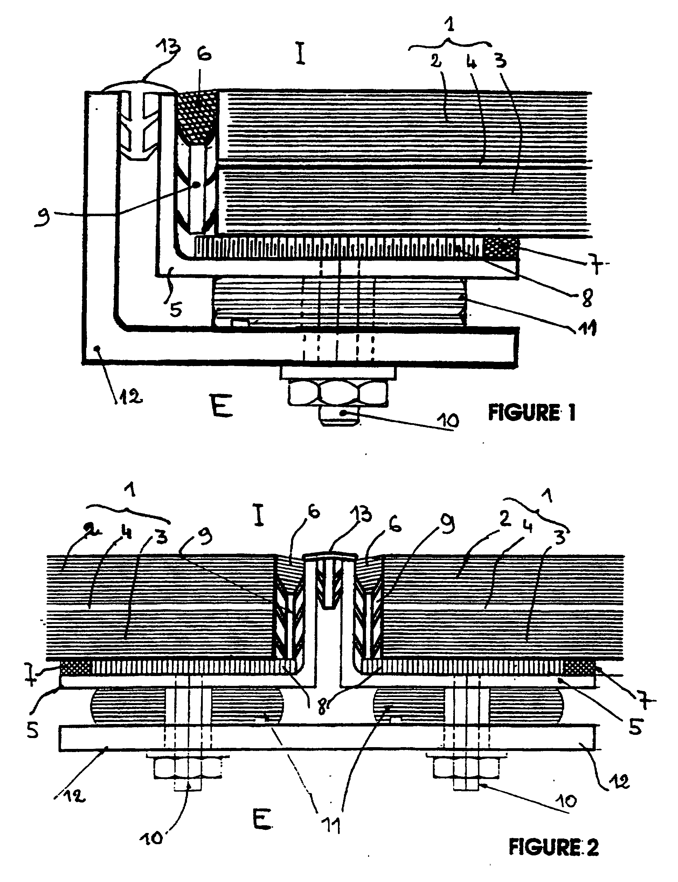

La figure 1 montre une partie d'un ensemble du type aquarium monté selon une première variante de l'invention.

Sur cette figure, la lette I désigne l'intérieur de l'aquarium, la lettre E désigne l'extérieur.

Cette partie d'aquarium comporte une paroi 1 en verre, notamment en verre feuilleté constituée d'une pluralité de plaques de verre, notamment deux plaques 2 et 3 assemblées grâce à une matière plastique intercalaire 4 du type PVB. Cette paroi 1 est assemblée en usine avec un châssis 5 par exemple un cadre métallique, ou en matériau composite, dont les éléments ont un profil en L, grâce à au moins deux cordons 6 et 7 de joint collant déposé pâteux et apte à sécher, polymériser et/ou de façon générale durcir, associant ainsi la paroi 1 et le châssis 5 de façon étanche, à la fois sur la tranche et sur une face de la paroi 1. Ces joints 6 et 7 sont par exemple en silicone. Avantageusement, notamment pour favoriser le durcissement homogène des joints 6 et 7 dans toute leur épaisseur, lesdits joints sont de relativement faible épaisseur ou profondeur, et ils sont associés avec d'autres éléments d'étanchéité et de calage : un joint 8 préfabriqué, monté sec sous la paroi 1, apte à résister au poids de l'aquarium et de son contenu, par exemple en élastomère de silicone et un joint 9, également préfabriqué en forme de « sapin » introduit sur le côté de la paroi 1.

La taille du châssis 5 et la position des joints collants 6 et 7 est telle que l'intercalaire 4 du feuilleté formant la paroi 1 est protégé du contact avec le contenu de l'aquarium, dans certains cas de l'eau de mer, qui pourrait être chimiquement agressive vis-à-vis dudit intercalaire 4.

Les portions du châssis 5 parallèles aux faces de la paroi 1, sont équipées de moyens pour l'attacher à une structure. Ces moyens peuvent être des vis, des goujons filetés tels que 10, solidaires du châssis 5 ou des moyens équivalents.

Châssis 5 et attaches telles que 10 constituent les moyens mécaniques pour solidariser les parois telles que 1 avec la structure.

Ce sous-ensemble ainsi constitué est fabriqué en usine, avec le matériel approprié, en choisissant les matériaux compatibles notamment pour un bon collage stable dans le temps, dans les ambiances les plus favorables, notamment hygrométrie, température pour favoriser le collage, le séchage des joints collants 6 et 7.

Ce sous-ensemble peut également être pourvu en usine du joint qui réalisera la véritable étanchéité de l'aquarium : un joint (11), ou en variante, il peut s'agir d'une bande de joint (11) séparée, mise en place au moment de la mise en oeuvre de ce sous-ensemble.

La paroi en verre de ce sous-ensemble ainsi encadrée par le châssis 5 est protégée des chocs et elle peut facilement et sans risque de détérioration être manipulée et transportée sur les lieux de construction de l'aquarium.

Pour réaliser l'aquarium sur le site, les sous-ensembles tels que décrits ci-dessus doivent être associés et montés dans une structure contre laquelle ils s'appuient et qui leur confère la solidité nécessaire et notamment la capacité de résister à la pression de l'eau à l'intérieur de l'aquarium.

Cette structure référencée 12 forme un cadre autorisant la vision de l'intérieur de l'aquarium au travers des parois 1.

Les sous-ensembles constitués des parois 1, associées à leur châssis 5, sont posés à l'intérieur de la structure 12 avec intercalation du joint 11 et les deux sont solidarisés par les moyens d'attache tels que 10.

Le serrage est tel que les joints 11 sont mis en compression, ce qui assure l'étanchéité. Un chapeau 13 est disposé à la jonction entre châssis 5 et structure. Ce chapeau empêche l'entrée de déchets, objets, animaux divers dans l'espace séparant châssis 5 et structure 12, mais il ne réalise pas l'étanchéité à l'eau.

Le figure 2 illustre l'assemblage de deux plaques de verre 1 selon cette première variante de l'invention pour réaliser une paroi en deux parties, par exemple de grande longueur ou hauteur.

On retrouve les mêmes éléments que sur la figure 1, avec les mêmes références.

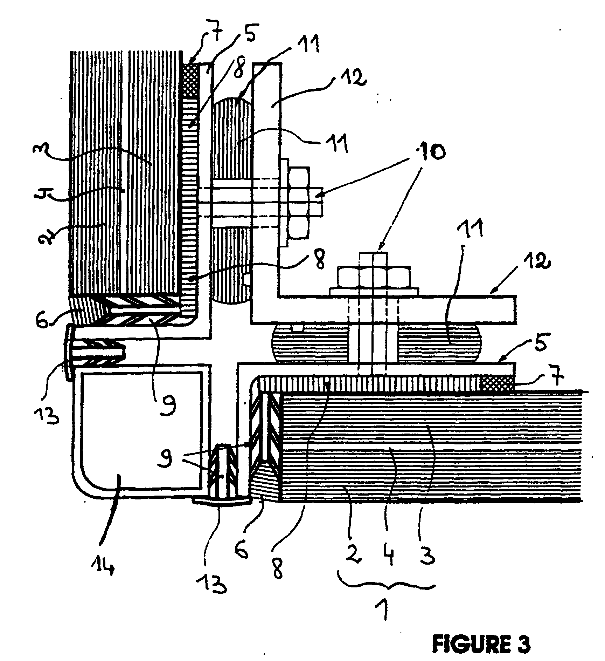

La figure 3 illustre l'assemblage de deux plaques de verre 1 selon cette première variante de l'invention pour réaliser un angle d'aquarium. La partie montrée de la structure 12 forme un angle.

Une pièce supplémentaire 14 est disposée à l'intérieur de l'aquarium pour procurer une continuité de surface sans aspérité.

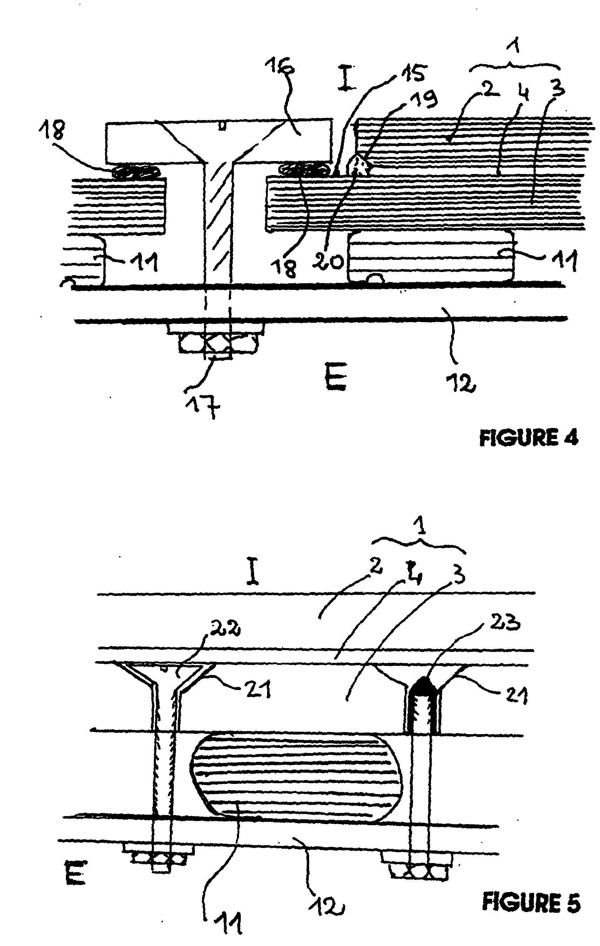

La figure 4 illustre une autre variante de l'invention, toujours selon le même principe consistant à préassembler des sous-ensembles en usine, aptes ensuite à être montés rapidement dans une structure sans usage de joints pâteux difficiles à poser et longs à durcir.

Dans cette seconde variante, on retrouver l'intérieur I et l'extérieur E de l'aquarium, la paroi 1 formée de par exemple deux feuilles de verre 2 et 3, associées avec l'intercalaire 4 du type PVB. Dans cette seconde variante, les deux feuilles de verre 2 et 3 sont décalées, au moins à certains endroits de leur périphérie et c'est sur le (ou les) débord(s) 13 de la feuille 3, celle la plus extérieure, que vient (ou viennent) s'appuyer une (ou des) pièce(s) de blocage 16, par exemple en métal ou en matériau composite. Cette (ou ces) pièce(s) est (sont) pourvue(s) de moyens d'attache 17 à la structure 12, tels des vis, tiges filetées, écrous, ... Ces pièces de blocage 16 appuient sur les débords 15 des parois 1 et les relient à la structure 12, des joints secs 11, identiques à ceux déjà notés dans la première variante, actifs lorsque comprimés par le poids de l'aquarium et de son contenu et/ou par serrage contre la structure 12 avec les attaches 17 des pièces de blocage 16, étant intercalés entre paroi 1 et structure 12.

De préférence, des joints 18 sont également prévus entre les sous-faces des pièces de blocage 16 et les débords 15.

Avantageusement pour éviter les attaques chimiques de l'intercalaire 4 par le contenu de l'aquarium, notamment l'eau de mer, l'arête de la feuille de verre 2 est taillée en biseau ou chanfrein 19, ce qui permet d'y injecter un mastic 20 neutre chimiquement vis-à-vis de la matière de l'intercalaire 4.

Là encore, dans cette seconde variante, une préparation des sous-ensembles est réalisée en usine, réduisant le montage sur site à des opérations simples et rapides.

Dans la troisième variante illustrée sur la figure 5, les parois 1 sont en verre feuilleté et la feuille extérieure est aménagée pour être directement solidarisée à la structure 12.

Ces aménagements sont par exemple des trous fraisés 21 traversants, dont la partie la plus large sera disposée au contact de l'intercalaire 4, et qui sont percés sur la feuille 3 avant son feuilletage avec l'autre feuille 2. Ces trous 21 peuvent recevoir des vis 22 qui viendront se fixer dans la structure 12 avec toujours interposition du joint sec 11, ou des pièces métalliques femelles taraudée 23 aptes à recevoir une vis ou un goujon fileté pour attacher la paroi 1 à la structure 12.

Ces nouveaux concepts pour constituer des aquarium, peuvent aussi s'appliquer à la fabrication d'ensembles divers : réservoirs, piscines, voire même de parois de bâtiments de grandes dimensions.

Les parois de verre 1 pour bâtiments sont préassemblées sur des châssis, ou des éléments de châssis aptes à être associés pour former un châssis, et ce sont ces châssis qui sont reliés à la structure.

Ainsi les parois de bâtiment sont du même type que les aquarium, pour ce qui regarde le concept de montage décrit précédemment.

Grâce à ce nouveau concept, les opérations sur chantier sont réduites et courtes, et les opérations de préassemblage ou de préparation en usine peuvent se faire dans des conditions optimales.

## Revendications

1. Ensemble du type réservoir, piscine, aquarium, comprenant une pluralité de parois en verre (1) et une structure (12) encadrant lesdites parois (1), notamment pour solidifier l'ensemble, et des joints d'étanchéité, dans lequel les parois (1) en verre sont équipées de moyens mécaniques (5 et 8, 16, 17, 23 ou 22) grâce auxquels elles sont solidarisées avec la structure (12), les joints (11) d'etanchéité étant disposés entre les parois (1) elles-mêmes et/ou les moyens mécaniques de solidarisation avec la structure (12) et ladite structure (12), **caractérisé en ce que** les parois en verre (1) sont en verre feuilleté avec intercalaire (4) du type PVB et **en ce que** les moyens mécaniques de solidarisation comportent un châssis (5) monté sur les parois en verre (1) et équipé de moyens d'attache (10) du type vis de serrage ou trou taraudé apte à recevoir un goujon fileté, ledit châssis (5) étant un élément à section en L de dimensions telles qu'il autorise un joint (6) de mastic pâteux du type silicone entre lui et le verre, qui protège l'intercalaire plastique (4) des agressions chimiques notamment avec de l'eau de mer qui pourrait remplir ledit ensemble.

2. Ensemble selon la revendication 1, **caractérisé en ce que** les joints (11) d'étanchéité entre parois (1) et/ou moyens mécaniques (5) de solidarisation avec la structure (12) et ladite structure (12) sont des joints (11) secs efficaces en étant comprimés.

3. Ensemble selon l'une des revendications 1 ou 2, **caractérisé en ce que** les parois en verre (1) sont des feuilletés décalés dans lesquels la plaque de verre (3) la plus extérieure déborde par rapport à la ou les autre(s), au moins à certains endroits de la périphérie du verre (1), le moyen de fixation mécanique à la structure étant une ou des pièce(s) de blocage (16) s'appuyant sur la (ou les) partie(s) débordante(s) (15) de la plaque de verre (3) extérieure, fixée(s) notamment par vissage à la structure (12) et comprimant le (ou les joint(s) (11) d'étanchéité disposé(s) entre la paroi du verre (12) et la structure (12).

4. Ensemble selon la revendication 3, **caractérisé en ce qu'**un joint complémentaire (18), en particulier joint sec compressible, est intercalé entre pièce(s) de blocage (16) et débord(s) (15) de verre sur lequel (ou lesquels) elle(s) appuie(nt).

5. Ensemble selon l'une des revendications 3 ou 4, **caractérisé en ce que** la plaque de verre (3) extérieure est décalée selon un des modes suivants :
à certains endroits avec une pluralité de pièces de bocage (16) distinctes appuyant sur chacun de ces endroits, sur toute une bande de verre, avec une pièce de blocage (16) ayant toute la longueur de ladite bande.

6. Ensemble selon l'une des revendications 3 à 5, **caractérisé en ce que** l'intercalaire (4) du feuilleté est protégé des attaches chimiques, notamment dues au contenant dudit ensemble du type eau de mer, par un joint (20) chimiquement neutre vis-à-vis de l'intercalaire déposé dans un chanfrein (19).

7. Ensemble selon la revendication 1, **caractérisé en ce que** les plaques (3) extérieures des feuilletés constituant les parois (1) sont équipées d'un trou fraisé (21) dans lequel est insérée une vis (22) dont la partie filetée permet la fixation à la structure (12) ou une pièce femelle taraudée (23) apte à recevoir une vis ou un goujon de fixation à la structure (12).

## Patentansprüche

1. Aufbau vom Typ eines Wasserbeckens, Swimmingpools und Aquariums, der eine Vielzahl von Glaswänden (1), eine Konstruktion (12), die diese Wände (1), insbesondere, um das Ganze zu versteifen, einfasst, und Dichtungen umfasst, wobei die Glaswände (1) mit mechanischen Mitteln (5 und 8, 16, 17, 23 oder 22) ausgestattet sind, durch welche sie mit der Konstruktion (12) fest verbunden sind, und die Dichtungen (11) zwischen den Wänden (1) selbst und/oder den mechanischen Mitteln für die feste Verbindung mit der Konstruktion (12) und der Konstruktion (12) angeordnet sind, **dadurch gekennzeichnet, dass** die Glaswände (1) aus Verbundglas mit einer PVB-Zwischenschicht (4) bestehen, **und dass** die mechanischen Verbindungsmittel einen Rahmen (5) umfassen, der an den Glaswänden (1) angebracht und mit Befestigungsmitteln (10) vom Typ Spannschraube oder mit Innengewinde versehenes Loch, das einen mit Außengewinde versehenen Schraubenbolzen aufnehmen kann, ausgestattet ist, wobei der Rahmen (5) ein Element mit L-förmigem Querschnitt und derartigen Abmessungen ist, dass er eine Dichtung (6) aus Kitt vom Typ Silicon zwischen ihm und dem Glas ermöglicht, welche die Kunststoffzwischenschicht (4) vor chemischen Angriffen, insbesondere durch das Meerwasser, mit welchem der Aufbau gefüllt werden kann, schützt.

2. Aufbau nach Anspruch 1, **dadurch gekennzeichnet, dass** die Dichtungen (11) zwischen den Wänden (1) und/oder mechanischen Mitteln (5) für die feste Verbindung mit der Konstruktion (12) und der Konstruktion (12) trockene Dichtungen (11) sind, die durch Zusammenpressen wirksam werden.

3. Aufbau nach Anspruch 1 oder 2, **dadurch gekennzeichnet, dass** die Glaswände (1) aus miteinander verbundenen, gegeneinander versetzten Glasscheiben bestehen, wobei die äußerste Glasscheibe (3) in Bezug auf die andere/n wenigstens an bestimmten Stellen des Randes der Glaswand (1) übersteht und das mechanische Mittel zur Befestigung an der Konstruktion ein oder mehrere Arretierteil/e (16) ist/sind, das/die sich an den/die überstehenden Teil/e (15) der äußeren Glasscheibe (3) anlegt/anlegen, insbesondere durch Verschrauben an der Konstruktion (12) befestigt ist/sind und die Dichtung/en (11), die zwischen Glaswand (1) und Konstruktion (12) angeordnet ist/sind, zusammenpreßt/zusammenpressen.

4. Aufbau nach Anspruch 3, **dadurch gekennzeichnet, dass** zwischen dem/den Arretierteil/en (16) und dem/den Glasüberstand/Glasüberständen (15), auf welchem/welchen es/sie aufliegt/aufliegen, eine komplementäre Dichtung (18), insbesondere eine zusammenpreßbare trockene Dichtung, eingefügt ist.

5. Aufbau nach Anspruch 3 oder 4, **dadurch gekennzeichnet, dass** die äußere Glasscheibe (3) auf eine der folgenden Arten versetzt ist: an bestimmten Stellen mit einer Vielzahl einzelner Arretierteile (16), die auf jeder dieser Stellen aufliegen, und über einen gesamten Glasstreifen mit einem Arretierteil (16), das die gesamte Länge dieses Streifens einnimmt.

6. Aufbau nach einem der Ansprüche 3 bis 5, **dadurch gekennzeichnet, dass** die Zwischenschicht (4) des Verbundglases vor chemischen Angriffen, insbesondere durch den Inhalt vom Typ Meerwasser des Aufbaus, von einer gegenüber der Zwischenschicht chemisch neutralen Dichtung (20) geschützt wird, die in einer Fase (19) angeordnet ist.

7. Aufbau nach Anspruch 1, **dadurch gekennzeichnet, dass** die äußeren Glasscheiben (3) der die Wände (1) bildenden Verbundgläser mit einem Senkloch (21) versehen sind, in welchem sich eine Schraube (22), deren mit Außengewinde versehener Teil die Befestigung an der Konstruktion (12) ermöglicht, oder ein mit Innengewinde versehenes aufnehmendes Teil (23), das eine Schraube bzw. einen Schraubenbolzen für die Befestigung an der Konstruktion (12) aufnehmen kann, befindet.

## Claims

1. Unit of the reservoir, swimming pool or aquarium type, comprising a plurality of glass walls (1) and a structure (12) framing the said walls (1), in particular in order to strengthen the units, and sealing joints, wherein the glass walls (1) are equipped with mechanical means (5 and 8, 16, 17, 23 or 22) by means of which they are connected with the structure (12), the sealing joints (11) being disposed between the walls (1) themselves and/or the mechanical means of connection with the structure (12) and the said structure (12), **characterised in that** the glass walls (1) are made from laminated glass with an insert (4) of the PVB type and **in that** the mechanical connection means comprise a frame (5) mounted on the glass walls (1) and equipped with fastening means (1) of the clamping screw type or a threaded hole able to receive a threaded bolt, the said frame (5) being an element with an L-shaped cross-section with dimensions such that it allows a joint (6) made of viscous putty of the silicone type between it and the glass, which protects the plastic insert (4) from chemical attacks in particular with sea water which might fill the said unit.

2. Unit according to Claim 1, **characterised in that** the sealing joints (11) between walls (1) and/or mechanical means (5) of connection with the structure (12) and the said structure (12) are dry joints (11) effective whilst being compressed.

3. Unit according to one of Claims 1 or 2, **characterised in that** the glass walls (1) are offset laminates in which the outermost glass sheet (3) projects with respect to the other or others, at least at certain points on the periphery of the glass (1), the means of mechanical fixing to the structure being one or more locking pieces (16) bearing on the projecting part or parts (15) of the external glass sheet (3), fixed in particular by screwing to the structure (12) and compressing the sealing joint or joints (11) disposed between the wall of the glass (1) and the structure (12).

4. Unit according to Claim 3, **characterised in that** a supplementary joint (18), in particular a compressible dry joint, is interposed between locking piece or pieces (16) and glass projection or projections (15) on which it or they bear.

5. Unit according to one of Claims 3 or 4, **characterised in that** the external glass sheet (3) is offset according to one of the following methods:
at certain points with a plurality of distinct locking pieces (16) bearing on each of these points, over an entire glass strip, with a locking piece (16) having the entire length of the said strip.

6. Unit according to one of Claims 3 to 5, **characterised in that** the insert (4) of the laminate is protected from chemical attacks, in particular due to the content of the said unit of the sea water type, by a joint (20) which is chemically neutral vis-à-vis the insert deposited in a chamfer (19).

7. Unit according to Claim 1, **characterised in that** the external sheets (3) of the laminates constituting the walls (1) are equipped with a milled hole (21) in which there is inserted a screw (22) whose threaded part allows fixing to the structure (12) or a female threaded piece (23) able to receive a screw or bolt for fixing to the structure (12).
